# EUROPÄISCHE PATENTANMELDUNG

(11) **EP 0 786 478 A2**
(43) Veröffentlichungstag der Anmeldung: **30.07.1997**
(21) Anmeldenummer: 97100916.2
(22) Anmeldetag: 22.01.1997
(51) Int. Cl.: C08F 8/12

(54) **Verfahren zur Herstellung von Polyvinylalkohol**

(30) Priorität: 27.01.1996 DE 19602901
(71) Anmelder: HOECHST AKTIENGESELLSCHAFT, 65926 Frankfurt am Main (DE)
(72) Erfinder: Fuss, Robert W. Dr., 65779 Kelkheim (DE); Müller, Hans-Karl, 65451 Kelsterbach (DE)

(57) **Zusammenfassung**

Die Reaktion von Polyvinylacetat in methanolischer Lösung mit methanolischem Natriumhydroxid bei einer Temperatur zwischen 10 °C und 65 °C unter Rühren bei einer Rührgeschwindigkeit von 5 bis 200 U/min mit einem Rührer, der ein Verhältnis von Rührerdurchmesser (d) zu Behälterdurchmesser (D) im Bereich von 0,6 < d/D < 0,999 aufweist, führt zu einem homogen hydrolysierten Polyvinylalkohol.

## Beschreibung

Die vorliegende Erfindung betrifft ein Verfahren zur Herstellung von Polyvinylalkohol mit homogenem Verseifungsgrad durch hydrolytische Spaltung geeigneter Polyvinylacetate unter Reaktionsbedingungen, bei denen die gewöhnlich auftretende Gelphase unterdrückt wird.

Die Verseifung von Polyvinylacetat zu Polyvinylalkohol wird großtechnisch vorzugsweise in einem kontinuierlichen Prozeß durchgeführt. Dabei wird das sogenannte Bandverfahren genutzt, das beispielsweise in US-A 3 278 505 und GB-A 1 224 113 beschrieben ist. Eine üblicherweise methanolische Lösung von Polyvinylacetat wird mit methanolischer Natronlauge in einem geeigneten Rohrsystem zwangsgemischt und auf ein Förderband gegeben. Das Band ist derart gebaut, daß es an der Aufgabestelle eine Art Trog bildet, der im weiteren Verlauf abflacht. Die aufgegebene methanolische Lösung beginnt nach kurzer Zeit zu gelieren und ist am Ende des Bandes zumeist völlig fest. Am Bandende wird der feste Polyvinylalkohol einer Mühle zugeführt und nach Zerkleinerung bei Bedarf zum Abstoppen der Hydrolysereaktion mit einer essigsauren methanolischen Waschlösung gewaschen. Nach entsprechender Aufarbeitung und Trocknung wird das Produkt als Feststoff erhalten.

Wird das Herstellungsverfahren diskontinuierlich betrieben, wie beispielsweise in DE-B 23 04 684 beschrieben, findet die Hydrolyse in einem Kessel statt, in dem methanolische Natronlauge in die Polyvinylacetatlösung eingetragen und vermischt wird. In Abhängigkeit von der Konzentration der Natronlauge tritt die Gelphase früher oder später ein, das Rührwerk muß dann gewöhnlich abgeschaltet werden, um es vor Beschädigung durch Überlastung zu schützen. Der so hergestellte Polyvinylalkohol liegt jetzt als festes Gel im Kessel vor und wird durch Einleitung von Wasserdampf langsam aufgelöst. Je nach Ansatzgröße kann dieser Vorgang leicht 20 und mehr Stunden betragen. Schließlich wird das Produkt als wäßrige Lösung erhalten.

Ein Nachteil des kontinuierlichen Verfahrens ist sein hoher Kapitalbedarf. Außerdem ist die Apparatur für dieses Verfahren nur wenig flexibel bei der Umstellung auf andere Produkttypen, da die Apparatur erst völlig leer gefahren und nach Reinigung entsprechend neu angefahren werden muß. Ferner ist das Abstoppen der Reaktion mittels Essigsäure im Waschturm bei manchen Polyvinylalkohol-Typen ein Problem. Dieser Reaktionsschritt führt bei niedrigviskosen Polyvinylalkoholen mit niedrigem Molekulargewicht dazu, daß der Anteil feiner Teilchen, der bei derartigen Typen immer besonders hoch ist, ausgewaschen wird und über die wäßrige Flüssigphase in die Kläranlage gelangt. Dies führt zu einem hohen CSB-Wert (Chemischer Sauerstoff-Bedarf) für derartige Abwässer, der sich in hohen Abwasserkosten niederschlägt. Außerdem führt dieser signifikante Verlust an Material zu geringen Ausbeuten. Wegen dieser Probleme ist das Bandverfahren eher für Polyvinylalkohole geeignet, die ein höheres Molekulargewicht besitzen und hochkapazitive Produkttypen darstellen.

Die Nachteile des diskontinuierlichen Verfahrens liegen in der Produktqualität des erhaltenen Polyvinylalkohols. Obwohl die Zeit bis zur Gelbildung durch die Konzentration der Natronlauge beeinflußt werden kann und damit die Zeit für die gleichmäßige Durchmischung der zugegebenen Katalysatorlösung verlängert werden kann, wird häufig beobachtet, daß das erhaltene Produkt nicht einheitlich ist. Es gibt eine Verteilung von verschiedenen Hydrolysegraden zwischen ca. 96 und 100 %. Dies ist besonders nachteilig, wenn der Hydrolysegrad nennenswerter Anteile 100 % beträgt, da diese Anteile nur noch sehr schwer in Wasser in Lösung gehen und Anlaß zur Ausbildung gequollener Gelteilchen geben. Die Produkte zeigen unterschiedliche Brechungsindices innerhalb einer Lösung, da sie nicht völlig homogen gelöst sind. Die gequollenen Produktteilchen führen besonders in nachgeschalteten Verarbeitungsschritten zu deutlichen Beeinträchtigungen bei der Verarbeitung und der Produktqualität.

In der Patentschrift SU-B 891 691 wird ein Verfahren zur Herstellung von Polyvinylalkohol beschrieben, bei dem die Bildung der Gelphase unterbunden wird. Das beanspruchte Herstellungsverfahren durch alkalische Verseifung von Polyvinylacetat in Methanol wird in einem kapazitiven Apparat mit Rührwerk durchgeführt, das dadurch gekennzeichnet ist, daß die Reaktion in drei Stufen bzw. Phasen durchgeführt wird. In der ersten Phase stellt man 20 bis 90 Minuten lang die Verrührung des Reaktionsmediums im gesamten Apparatevolumen bei einer Schergeschwindigkeit von 50 bis 100 s⁻¹ bis zum Erreichen eines Anteils von 40 bis 45 % Restacetatgruppen sicher, in der zweiten gelangt das Medium 10 bis 15 Minuten lang in eine vom Volumen her begrenzte Reaktionszone, in der eine intensive Verrührung bei einer Schergeschwindigkeit von 200 bis 500 s⁻¹ sichergestellt wird; in der letzten Stufe erfolgt 100 bis 200 Minuten lang Verrührung und Homogenisierung bei einer Schergeschindigkeit von 50 bis 100 s⁻¹.

Aufgabe der vorliegenden Erfindung war daher, ein apparativ einfaches einstufiges Verfahren zur Herstellung von Polyvinylalkohol zu entwickeln, das maximale Flexibilität hinsichtlich verschiedener Polyvinylalkohol-Typen besitzt und die Herstellung von Produkten mit weitgehend einheitlichem Hydrolysegrad ermöglicht.

Es wurde gefunden, daß es allein durch Nutzung von geeigneten Rührern bzw. durch geeignete Rührung in einem einstufigen Verfahren innerhalb eines einzigen Reaktors möglich ist, die Ausbildung der Gelphase bei der Hydrolyse des Polyvinylacetats zu unterdrücken, ohne daß besondere Vor- und/oder Nachbehandlungen durchgeführt werden müssen.

Gegenstand der Erfindung ist ein Verfahren zur Herstellung von Polyvinylalkohol durch Reaktion von Polyvinylacetat in methanolischer Lösung mit methanolischem Natriumhydroxid bei einer Temperatur zwischen 10 °C und 65 °C unter Rühren bei einer Rührgeschwindigkeit von 5 bis 200 U/min, vorzugsweise 10 bis 100 U/min, insbesondere bevorzugt 30 bis 80 U/min, mit einem Rührer, der ein Verhältnis von Rührerdurchmesser (d) zu Behälterdurchmesser (D) aufweist im Bereich von 0,6 < d/D < 0,999, besonders bevorzugt im Bereich von 0,85 < d/D < 0,95.

Die erfindungsgemäß genutzten Rührer zeichnen sich dadurch aus, daß sie in der hochviskosen Phase das Reaktionsvolumen so effektiv rühren, daß es nicht zur Ausbildung einer zusammenhängenden Gelphase kommt, sondern vielmehr eine Art Brei erhalten wird. Die Rührer können beispielsweise Wendel- oder wendeldartige Rührer, Anker- oder ankerartige Rührer sowie mehrstufige Balkenrührer sein. Genannt seinen hier beispielhaft Rührer des Typs ®PARAVISK (Fa. Ekato) oder ®ALPHA-RÜHRER (Fa. Stelzer). Die Rührer können auch zusätzlich durch Maßnahmen modifiziert werden, beispielsweise durch Anbringen eines zusätzlichen Schneckenrührers oder eines (Quer)Balkenrührers auf der gleichen Welle. Die Rührwirkung kann auch durch mehrere Rührerwellen erzielt werden, beispielsweise mittels eines Koaxialrührers, wenn wenigstens einer der Rührer die oben genannten Bedingungen erfüllt.

Das erfindungsgemäße Verfahren wird vorzugsweise bei einer Temperatur zwischen 20 °C und 60 °C, insbesondere zwischen 30 °C und 55 °C, unter einem Druck von vorzugsweise 50 bis 150 kPa, insbesondere unter Normaldruck, durchgeführt. Die Durchführung der Verseifung bei erhöhter Temperatur bedingt, daß die Menge an eingesetztem Natriumhydroxid sehr gering gehalten werden kann, der gewünschte Hydrolysegrad aber dennoch erreicht wird.

Die Menge des eingesetzten Natriumhydroxids beträgt vorzugsweise 0,05 bis 10 Gew.-%, insbesondere 0,1 bis 2 Gew.-%, bezogen auf das eingesetzte Polyvinylacetat.

Die erfindungsgemäße Verseifung des Polyvinylacetats kann vorzugsweise durchgeführt werden mit einem Feststoffgehalt von 1 bis 80 Gew.-%, insbesondere 20 bis 70 Gew.-%, besonders bevorzugt 30 bis 60 Gew.-%.

Das durchschnittliche Molekulargewicht (M_{w}) des eingesetzten Polyvinylacetats liegt vorzugsweise im Bereich von 1000 bis 100.000 g/mol, insbesondere im Bereich von 1000 bis 60.000 g/mol, besonders bevorzugt im Bereich von 2.000 bis 30.000 g/mol.

Die Reaktionsmischung wird durch das Rühren des Materials so in Bewegung gehalten, daß die Ausbildung des Gels nicht eintreten kann. Die minimal notwendige Rührerleistung zur Vermeidung des Gelphasenausbildung hängt sehr stark von den jeweiligen Reaktionsbedingung, wie Konzentration der Lösung, Feststoffanteil, Temperatur, Konzentration des Natriumhydroxids und Molekulargewicht des eingesetzten Polyvinylacetats ab. In Verlauf der Reaktion nimmt die Viskosität der Lösung zu, meßbar an der Kraftaufnahme des Rührers, und es bilden sich in Methanol unlösliche kleine Teilchen des gebildeten Polyvinylalkohols, die eine Art Verbreiung des Reaktionsmediums bewirken. Klumpenbildung durch größere Aggregate wird nicht beobachtet. Der Reaktionsansatz bleibt zu jeder Zeit gut rührbar und fließfähig, da keine Gelstrukturen aufgebaut werden. Etwa 20 bis 30 Minuten nach Zugabe des Natriumhydroxids bewirkt der Eintritt der Synärese eine Erniedrigung der Viskosität, wodurch das Rühren erleichtert wird. Nach Eintritt der Synärese kann bei Bedarf das Rühren unterbrochen werden, da jetzt keine Gelbildung mehr eintritt. Der Feststoff beginnt in diesem Falle einfach zu sedimentieren.

Das so gewonnene Material ist homogen verseift, so daß keine Streuung des Hydrolysegrades auftritt. Es werden keine Grobteile erhalten. Durch die homogene Reaktionsführung werden auch keine extrem feinteiligen Anteile gebildet. Dadurch ist die Filtration problemlos möglich und es wird kein Material mit der Waschlösung ausgetragen, so daß ein schwerwiegendes Problem des kontinuierlichen Verfahrens vermieden wird, daß bei niedrigen Molmassen auch die Teilchengrößen einen akzeptablen Wert unterschreiten. Die bei dem bekannten Verfahren auftretenden Probleme wie niedrige Ausbeuten infolge des Materialverlusts feinteiliger Anteile, Rohrverstopfungen und Temperaturinhomogenitäten treten beim erfindungsgemäßen Verfahren nicht auf. Auch eine Homogenisierung des erhaltenen Polyvinylalkohols durch späteres Mahlen ist nach dem erfindungsgemäßen Verfahren nicht erforderlich.

Gewöhnlich wird zur weiteren Verarbeitung die Rührung belassen und es kann kurze Zeit nach Eintritt der Synärese mit der Wasserdampfdestillation begonnen werden. Der Polyvinylalkohol wird, bedingt durch die große Oberfläche, vollkommen und schnell gelöst.

### BEISPIELE

Die in den Beispielen angegebenen Teile und Prozente beziehen sich auf das Gewicht, soweit nicht anders vermerkt.

Ein typisches Verseifungsexperiment gestaltet sich wie folgt:
Eingesetzt wurde ein Polyvinylacetat' dessen 10%ige methanolische Lösung eine Viskosität von 1,0 bis 5,0 mPa·s besaß (gemessen nach DIN 53015, Höppler-Viskosimeter).

Die Versuche erfolgten in einem beheizbaren 30-l-Glasrührgefäß DN 300 ohne Stromstörereinbauten. Der Feststoffgehalt (Polymer) betrug zwischen 20 und 65 Gew.-%. Die Verseifungen erfolgten, wenn nichts anderes angegeben wird, mit 1%iger NaOH, bezogen auf Feststoff in der Lösung, zugegeben in Form einer 10%igen methanolischen Natronlaugelösung. Die Temperatur betrug zu Beginn 30°C.

### Beispiel 1

Das eingesetzte, wasserklare und farblose Polyvinylacetat hatte folgende Spezifikationen:

| | |
|---|---|
| Viskosität (10%ig in Methanol, gemessen nach DIN 53015, Höppler-Kugelfallviskosimeter): | 1,74 mPa·s |
| Molekulargewichte (GPC): | Mw = 23.400 g/mol |
| | Mn = 8.250 g/mol |

### Rührer:

Wendelrührer mit Innenschnecke, d = 270 mm und Bodenrührer
Kesseldurchmesser (D): 300 mm
Verhältnis: d/D = 0,9

### Produkt:

Füllvolumen 20 l (h/D = 1)
Feststoffgehalt 40 %

Der mit 18 kg methanolischer Polyvinylacetatlösung gefüllte Behälter wurde auf 30 °C temperiert. Zwecks guter Durchmischung betrug die Rührergeschwindigkeit bei Eintrag von 792 g 10%iger methanolischer Natronlauge 80 U/min. Nach 2 Minuten wurde die Rührergeschwindigkeit auf 60 U/min zurückgenommen. Die Kraftaufnahme des Rührers stieg langsam an und erreichte nach ca. 20 Minuten ab Zugabe der methanolischen Natronlaugelösung ihr Maximum. Die Temperatur im Behälter stieg auf ca. 45 °C. Unter Eintritt der Synärese ging die Kraftaufnahme spürbar zurück. Etwa 30 Minuten nach Zugabe der methanolischen Natronlaugelösung wurde mit Einleitung des Wasserdampfs begonnen. Eine Erhöhung der Gefäßtemperatur von außen auf ca. 60 °C verhinderte, daß zu viel Wasserdampf kondensierte und somit der Füllstand überschritten wurde. Das Methanol wurde abdestilliert und der Polyvinylalkohol nach maximal 1,5 bis 2 Stunden vollständig gelöst.

Das so erhaltene Produkt hatte folgende Spezifikation:

| Bestimmungsgröße | Wert | Einheit |
|---|---|---|
| Feststoff | 15,07 | % |
| Restgehalt Methanol | 0,71 | % |
| Hydrolysegrad (HG) | 98,8 | mol-% |
| Esterzahl | 15,05 | mg KOH/g |
| Viskosität (4% in Wasser) | 2,61 | mPa·s |

### Beispiel 2

Das eingesetzte, wasserklare und farblose Polyvinylacetat hatte folgende Spezifikationen:

| | |
|---|---|
| Viskosität (10%ig in Methanol, gemessen nach DIN 53015, Höppler-Kugelfallviskosimeter): | 1,66 mPa·s |
| Molekulargewichte (GPC): | Mw = 22.000 g/mol |
| | Mn = 9.000 g/mol |

### Rührer:

Ankerrührer mit Innenschnecke, d = 700 mm und Bodenrührer
maximaler Leistungseintrag: 17,5 kW/m³
Kesseldurchmesser (D): 964 mm
Verhältnis: d/D = 0,73

### Produkt:

Füllvolumen 635 l
Feststoffgehalt 40%

Der mit 543 kg methanolischer Polyvinylacetatlösung gefüllte Behälter wurde auf 30 °C temperiert. Zwecks guter Durchmischung betrug die Rührergeschwindigkeit bei Eintrag von 23,9 kg 10%iger methanolischer Natronlauge 80 U/min. Nach 2 Minuten wurde die Rührergeschwindigkeit auf 60 U/min zurückgenommen. Die Kraftaufnahme des Rührers stieg langsam an und erreichte nach ca. 20 Minuten ab Zugabe der methanolischen Natronlaugelösung ihr Maximum. Die Temperatur im Behälter stieg auf ca. 45 °C. Unter Eintritt der Synärese ging die Kraftaufnahme des Rührers spürbar zurück. Etwa 30 Minuten nach Zugabe der methanolischen Natronlaugelösung wurde mit Einleitung des Wasserdampfs begonnen (30 kg/h). Die Manteltemperatur wurde stufenweise auf 60 °C, dann 80 °C, dann 90 °C und schließlich auf ca. 100 °C hochgeregelt. Um ein zu tiefes Fallen des Flüssigkeitsstands durch schnell abdestillierendes Methanol zu verhindern, wurde dreimal eine Menge von je 30 l Wasser zugespeist. Nach maximal 4 Stunden war das Methanol abdestilliert und der Polyvinylalkohol vollständig gelöst.

Nach der angegebenen Verfahrensweise wurde eine Konzentration des Polyvinylalkohols zwischen 25 und 30 % erreicht.

Das so erhaltene Produkt hatte folgende Spezifikationen:

| Bestimmungsgröße | Wert | Einheit |
|---|---|---|
| Feststoff | 28,45 | % |
| Restgehalt Methanol | 0,19 | % |
| Hydrolysegrad (HG) | 98,5 | mol-% |
| Esterzahl | 18,9 | mg KOH/g |
| Restgehalt Acetylgruppen | 1,445 | % |
| Aschegehalt (gerechnet als Na₂O) | 0,43 | % |
| Viskosität (4 % in Wasser) | 2,30 | mPa·s |

### Beispiel 3

Das eingesetzte, wasserklare und farblose Polyvinylacetat hatte folgende Spezifikationen:

| | |
|---|---|
| Viskosität (10%ig in Methanol): | 1,72 mPa·s |
| Molekulargewicht (GPC): | Mw = 20.320 g/mol |
| | Mn = 8560 g/mol |

### Rührer:

Wendelrührer mit Innenschnecke, d = 11,2 mm und Bodenrührer
Kesseldurchmesser (D): 11,5 mm
Verhältnis: d/D = 0,97

### Produkt:

Füllvolumen 0,8 l
Feststoffgehalt 35%

Der mit 750 g methanolischer Polyvinylacetatlösung gefüllte Behälter wurde auf 40 °C temperiert. Zwecks guter Durchmischung betrug die Rührergeschwindigkeit bei Eintrag von 9,45 g 10 %iger methanolischer Natronlauge 100 U/min. Nach 2 Minuten wurde die Rührergeschwindigkeit auf 80 U/min zurückgenommen. Die Kraftaufnahme des Rührers stieg langsam an und erreichte nach ca. 20 Minuten ab Zugabe der methanolischen Natronlaugelösung ihr Maximum. Die Temperatur des Behälters wurde von außen auf 60 °C gesteigert und dort gehalten. Unter Eintritt der Synärese ging die Kraftaufnahme spürbar zurück. Etwa 30 Minuten nach Zugabe der methanolischen Natronlaugelösung wurde mit Einleitung des Wasserdampfs begonnen. Das Methanol wurde abdestilliert und der Polyvinylalkohol war nach maximal 1,5 bis 2 Stunden vollständig gelöst.

Das so erhaltene Produkt hatte folgende Spezifikationen:

| **Bestimmungsgröße** | **Wert** | **Einheit** |
|---|---|---|
| Hydrolysegrad (HG) | 98,4 | mol-% |
| Esterzahl | 20,1 | mg KOH/g |
| Viskosität (4 % in Wasser) | 2,49 | mPa·s |

### Beispiel 4 A / Vergleichsbeispiel 4 B

Eine wasserklare, farblose Polyvinylacetat-Lösung mit einer Viskosität von 1,70 mPa·s (15 %ig in Ethanol, gemessen gemäß DIN 53015) wurde in zwei gleich große Hälften aufgeteilt. Der erste Ansatz (VERSUCH A) wurde mit einem Wendelrührer mit Innenschnecke (d = 270 mm) und Bodenrührer in einem Gefäß mit einem Durchmesser (D) von 300 mm ausgestattet. Der zweite Ansatz (VERSUCH B) wurde mit einem dreifachen Kreuzbalkenrührer (d = 150 mm; Höhe = 30 mm) (Verhältnis d/D = 0,5) bestückt.

Beide Versuche wurden mit einer 45 %igen methanolischen Polyvinylacetat-Lösung aufgefüllt und unter Stickstoff auf 30 °C temperiert. Die Lösung (17,5 kg) jedes Versuchs enthielt 7,875 kg Polyvinylacetat. Auf diesen Feststoffgehalt bezogen, wurden 0,6 % Natriumhydroxid (fest) und 3,325 % Wasser (zusammen als 10 %ige methanolische Lösung) als Katalysatorlösung hergestellt und in jeden Versuch gegeben. Zwecks homogener Vermischung wurde die Rührerdrehzahl auf 100 U/min für die Dauer von 2 Minuten erhöht. Anschließend wurde für den VERSUCH A die Drehzahl auf 60 U/min reduziert und für den VERSUCH B auf 100 U/min belassen.

Nach 20 Minuten ab Zusatz der Katalysatorlösung wurde bei beiden Ansätzen ein Anstieg der Viskosität beobachtet. Während VERSUCH A unter Anstieg der Kraftaufnahme weiter vollständig durchgerührt wurde und sich keine kontinuierliche Gelphase ausbilden konnte, zeigte der VERSUCH B eine geringere Zunahme der Kraftaufnahme. Dafür kam es im VERSUCH B jedoch zur Ausbildung einer kontinuierlichen Gelphase, so daß der Ansatz nicht mehr vollständig gerührt wurde. Die Kraftaufnahme des Rührers war bei VERSUCH B schnell wieder auf den ursprünglichen Wert zurückgefallen. Mit Eintritt der Synärese ging die Kraftaufnahme des Rührers im VERSUCH A wieder auf das ursprüngliche Maß zurück. Dreißig Minuten nach Zugabe der Katalysatorlösung wurde mit dem Eintrag von Wasserdampf durch ein Bodenventil begonnen. Die Reaktionsgefäße wurden dabei von außen auf 60 °C temperiert.

Nach 95 Minuten wurde im VERSUCH A eine klare homogene Lösung erhalten. Der mittlere Verseifungsgrad des Polyvinylalkohols wurde zu 88,1 Mol-% bestimmt.

Der VERSUCH B ergab nach 120 Minuten ebenfalls eine klare Lösung, die jedoch eine Vielzahl größerer und kleinerer unlöslicher Bestandteile enthielt. Die Analyse der unlöslichen Bestandteile ergab, daß sie Polyvinylalkohol mit einem Hydrolysegrad von ca. 95 Mol-% enthielten, während der mittlere Hydrolysegrad des gelösten Polyvinylalkohols aus VERSUCH B 88,4 Mol-% betrug.

## Patentansprüche

1. Verfahren zur Herstellung von Polyvinylalkohol durch Reaktion von Polyvinylacetat in methanolischer Lösung mit methanolischem Natriumhydroxid bei einer Temperatur zwischen 10 °C und 65 °C unter Rühren bei einer Rührgeschwindigkeit von 5 bis 200 U/min mit einem Rührer, der ein Verhältnis von Rührerdurchmesser (d) zu Behälterdurchmesser (D) im Bereich von 0,6 < d/D < 0,999 aufweist.

2. Verfahren nach Anspruch 1, dadurch gekennzeichnet, daß der Rührer ausgewählt ist aus der Gruppe der Wendelrührer, Ankerrührer und mehrstufigen Balkenrührer.

3. Verfahren nach Anspruch 1, dadurch gekennzeichnet, daß die Temperatur während der Reaktion zwischen 30 °C und 60 °C liegt.

4. Verfahren nach Anspruch 1, daddurch gekennzeichnet, daß die Reaktion unter Normaldruck stattfindet.

5. Verfahren nach Anspruch 1, dadurch gekennzeichnet, daß die Menge des eingesetzten Natriumhydroxids 0,05 bis 10 Gew.-%, bezogen auf das eingesetzte Polyvinylacetat, beträgt.

6. Verfahren nach Anspruch 1, dadurch gekennzeichnet, daß der Feststoffgehalt während der Reaktion 1 bis 80 Gew.-% beträgt.

7. Verfahren nach Anspruch 1, dadurch gekennzeichnet, daß das durchschnittliche Molekulargewicht (M_{w}) des eingesetzten Polyvinylalkohols 1000 bis 100.000 g/mol beträgt.

8. Polyvinylalkohol mit homogenem Verseifungsgrad, herstellbar nach dem Verfahren gemäß Anspruch 1.
